# EUROPEAN PATENT APPLICATION

(11) **EP 3 657 202 A2**
(43) Date of publication of application: **27.05.2020**
(21) Application number: 19211315.7
(22) Date of filing: 25.11.2019
(51) Int. Cl.: G01S 7/41, G01S 13/06, G01S 13/42, G01S 13/88, G01S 13/931, G01S 7/03, E01F 9/30, G01C 21/18, G01C 21/36, G08G 1/16

(54) **MM-WAVE RADAR BASED GUIDING SYSTEM AND METHODS USING THE SAME**

(30) Priority: 26.11.2018 US 201816199411
(71) Applicant: Novelic D.O.O., 11000 Belgrade (RS)
(72) Inventor: MIHAJLOVIC, Veljko, 11 000 Belgrade (RS); BRANKOVIC, Veselin, 11 000 Belgrade (RS); TASOVAC, Darko, 11 000 Belgrade (RS)
(74) Representative: Dennemeyer & Associates S.A.

(57) **Abstract**

The present invention discloses a mm-wave radar sensor system and its method of operation, comprising utilization of the passive markers, being placed on known objects. The proposed system can track distance and 3D orientation of the known objects under observation, can differentiate the shape classes of the previously passively marked known objects, and can improve navigation redundancy and autonomous driving in pre-defined environments, by using passive markers being placed on the traffic environment. A generic object can also be human being, having cloths having passive markers.

## Description

MM-wave radar sensor system described by apparatuses and method of operation for 3D object position detection, shape detection, smart autonomous driving in the pre-defined and marked areas and for authentication applications is introduced.

### Technical Field

The present invention relates to a sensor system and method of operation addressing set of applications: 3D object orientation and position of the known object, shape detection and selection of the known object classes, authentication and recognition of the classes of objects and classes of person as well as autonomous driving and parking in the pre-defined and known areas. MM-wave radar sensor system with its method of operation is introduced, using mm-wave radio frequencies.

### Background Art

The specific problems or known objects is addressed, where the sensor is on the 3D grades of freedom moving platform or objects is known and stable, and where the sensor is in stable position and objects is on 3D grades of freedom moving platform. The third class of addressed application by the proposed sensor system and its method of operation is recognising of the marked and known object if it is alone, or recognising the marked object within other non-marked objects, where in all three classes of application, the object can also be a live being having cloths which is marked by the approach, being described in this invention.

There is a strong motivation to deploy new generation of the sensors for the following application scenarios:
a) Detect 3D object position, object orientation, object distance to the sensor. This general application allows sub applications, where the known objects are market with fully passive means, without radio frequency power extraction to respond, or without other power supplies, like RFID:
   - 3D Object having the constant distance to the sensor changes it orientation in at least one of three planes, and the sensor detects the object 3D orientation. Practical subclass of the application can be that robot arm or building crane is recognising orientation and distance to the pre-defined class of objects, without using video information. Knowing orientation, the robot arm of crane is adopting grapping 3D lane on the orientation of the object, which allows autonomous working of the robots. In this scenario the sensor is observing the particular pre-defined object.
   - 3D Object changes it orientation in at least one of three planes, and the sensor detects the object 3D orientation and its distance to the sensors. In this scenario the sensor is observing the particular pre-defined object.
b) Detect classes of the object shapes, where the different classes of the object shapes are pre-defined, where at least one known shape is pre-defined. This general application allows sub applications, where the known objects are market with fully passive means, without radio frequency power extraction to respond, or without other power supplies, like RFID:
   - Two objects of the same shape are on the same distance to sensor. Due to specific introduced marking, the sensor recognised that the marked and pre-defined object is approaching sensors, and differentiate from the same object, which is not marked. The concrete sub-system application can be when two persons, and one: with factory approved clothes and one as a guest are approaching detection area of the sensor. The person having factory cloths has marked cloths, which allows to detect by the simple means, without video processing, if the person detected is part of the own personnel, or to detect that person, which is not a part of own personnel is present in the specific place, which contributes to the safety and security, general application field.
   - More than two objects, where each object is marked and has own pre-defined marking structure are approximately on the same distance to sensor, and the sensor recognised, if the object is passively marked differently from one to other pre-defined objects classes. Application example can be that we have objects for example in quadratic, triangular and oval shapes in one plane, which are passively marked with different combinations of at least two markers. They are laying on soil and sensor is on above looking them from the grapping crane. The sensor recognized which shape is observing on the soil and initialize pre-defined actions.
c) Detect 3D position of the vehicle with sensor using marked and known pre-defined environment. Classes or related applications are, the vehicle has radar sensor and static object on the predefined environment are marked, in the following ways:
   - simply passively marked. In that case we may have general parking area, having the specific height on the wall edges or prescribed area passive marks. The vehicle recognized markers and using this information and knowing pre-defined outlook of the parking area, allows autonomous driving in safe mode without video signal evaluation. The system can allow also autonomous parking.
   - passively marked with sets of the more than one marking class, with specific individual spatial position of at least two passive markers in each parking class. This may allow navigation redundancy of the vehicle position by passing through or driving in pre-defined environment scenario.

Application scenario c) may be explicitly favourable increasing safety when video recognition-based auto pilots are not functioning, or not functioning in the full capacity, as in case of smoke, fog or very dense direct light.
d) Detection if the seat is occupied and if the safety belt is locked, without need to have a power supply in the seat environment. State of art solutions are utilising power supply in the seats for safety belt locking, or sensor fusion radar plus video detecting safety belt.

The object is known, and the generalized object can be arbitrary non-live object, or live being having clothes or marked attached environment close to its surface. In the process of the decision the machine learning procedures may apply.

The state of art solutions are covering wireless systems, where the reflectors are reflecting the radio waves being send to them. The most popular such system are RFID systems, where RFID passive reflectors are without power, but they are using the energy being sent by RFID transmitter and they are making their identification, by sending their code, meaning that each reflector has unique identification, and RFID reader has a concept to read out those identification codes. Here is proposed in this invention to use the system of the radar sensor being used as normal radar sensor for measuring distances, speed and vibrations as a part of the system, where the fully passive reflector, without own reflector code identification, at least one, and preferably more than one fully identical, are used. If more than one are used the special arrangement of the identical passive reflectors are determining the 3D position of the known object, its shape and possible its identification, related to the classes of the same object, and not for identification of the objects being in the same class. This approach allows very low-cost deployment of the proposed system solution. The following set of the patent applications and granted patents as well as assotiated selected publications are describing the state of art in the field.

US20090058638**,** "Methods and apparatus for a pervasive locationing and presence detection systems", disclosed a locationing system for use in a wireless network generally includes a wireless switch and a global positioning system (GPS) with RFID Network. At least one RFID reader (mobile and/or fixed) is configured to communicate with the access port, and the RFID reader is configured to read an RFID tag and communicate RFID tag data to the wireless switch. RFID reader is sending data and receiving ID from the RFID transponder, taking power from the emitter RF signal strength.

US9325077B2**,** "Radar level gauge system and reflector", The present invention relates to reflector arrangement for proof test of a radar level gauge and to a radar level gauge system comprising such a reflector arrangement, for automotive tank application.

US8350752B2**,** "Radar level gauge system with bottom .." introduces a radar level gauge system, for determining a filling level of a product contained in a tank, the radar level gauge system comprising: a transceiver for generating, transmitting and receiving electromagnetic signals; a propagating device electrically connected to the transceiver and arranged to propagate a transmitted electromagnetic signal towards a surface of the product contained in the ...

US5387916**,** "Automotive Navigation system and Method", introduces the responder uses a Van Atta array antenna, using for navigation enhancement. The responder includes encoding means coupled to the receiving antenna means for imposing automotive navigation information on the collected interrogation signal, the responder including retrodirective means connected to the encoding means for retransmitting the encoding collected interrogation signal. This interrogator send coded signal by intention, addressing a vehicle travelling along a highway and it is not a part of the classing radar based distance collection systems.

US20150145711**,** "Retro-reflective radar patch antenna target for vehicle and road infrastructure identification" introduces a system concept where markers have preferably means of identifications, like RFID systems. The responders are emitting unique return signal so that the central controller identifying the roadway item of interest and determining a responsive action.

General background sources are explain the reflector planar approaches:
IEEE ANTENNAS AND WIRELESS PROPAGATION LETTERS, VOL. XX, 2018, "A Passive Re-Directing Van Atta Type Reflector" .This Letter demonstrates how to re-direct the re-radiated beam through passive alteration of this phase gradient. For this purpose, cross propagating isolation is required between the incident and reradiated signal paths. To this end, polarization duplexing can be used to achieve this isolation with a passive and reciprocal structure.

IEEE TRANSACTIONS ON MICROWAVE THEORY AND TECHNIQUES, VOL. 64, NO. 12, DECEMBER 2016 4763. "Inkjet-Printed Flexible mm-Wave Van-Atta Reflectarrays", introduces RFID Implementations for loT Smart Skins.

Thales Communications UK, "Design and Manufacture of a Low-Profile Radar Retro-Reflector" introduces system where retro-reflectors which are often passive, may contain active elements which may be included to enhance the backscattered signal, or to modify it in some way, such as by the introduction of modulation may happen for the identification purposes.

Maritime electronics 1978 "Radar reflectors for boats", explains basic for increasing radar cross sections and visibility of the boats to be better detected by the radar based searching. These bulky devices have no practical relevance for the mm-wave small radar based systems, and they are used always as a single passive device. This invention introduced passive reflectors, always more than one, and advantageously more than 10, being embedded in the vehicle infrastructure in the way that they are not visible, and advantageously with the metallisation coating. With this approach the visibility and detection of the car being observed by other car radar sensor may be dramatically increased.

### Summary of Invention

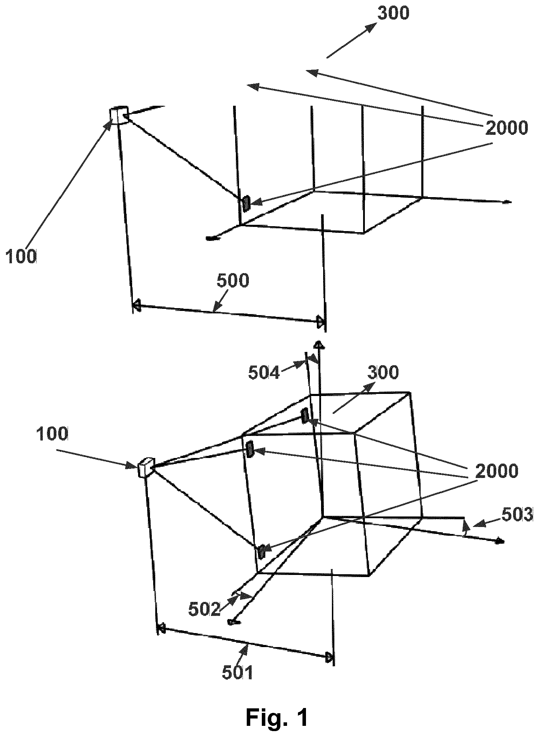

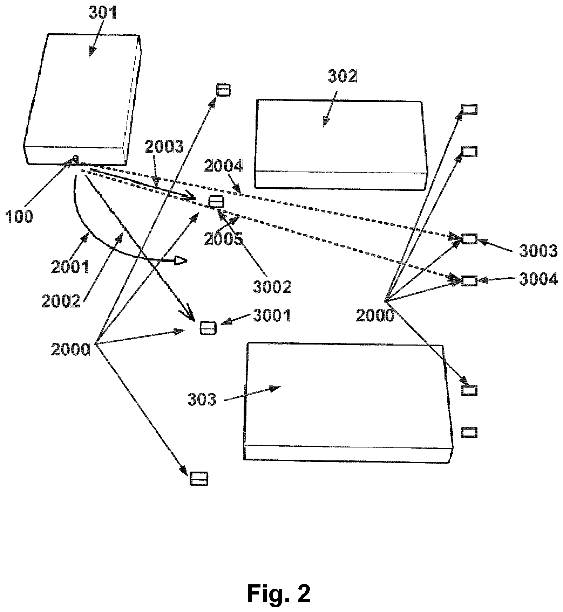

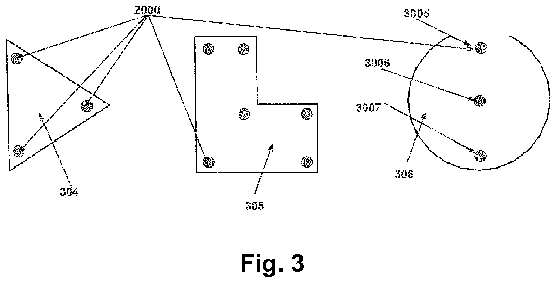

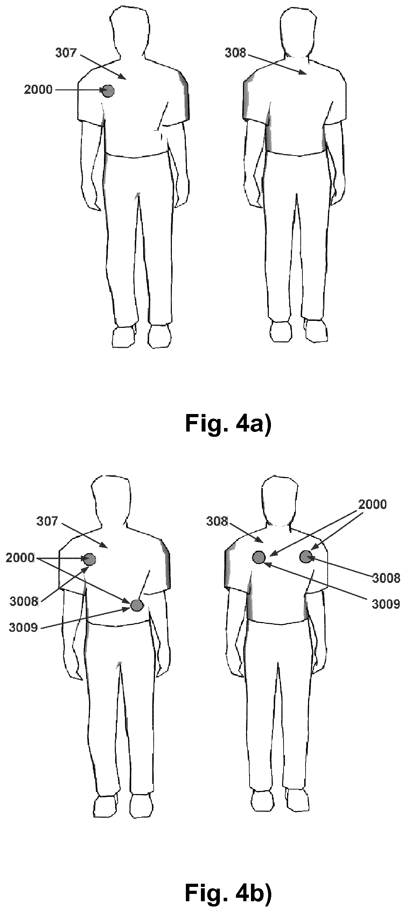

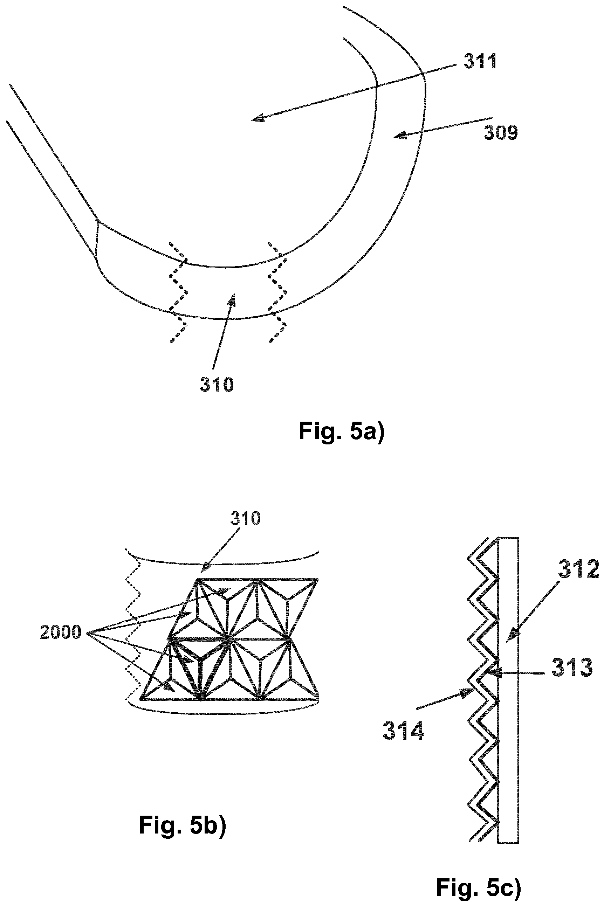

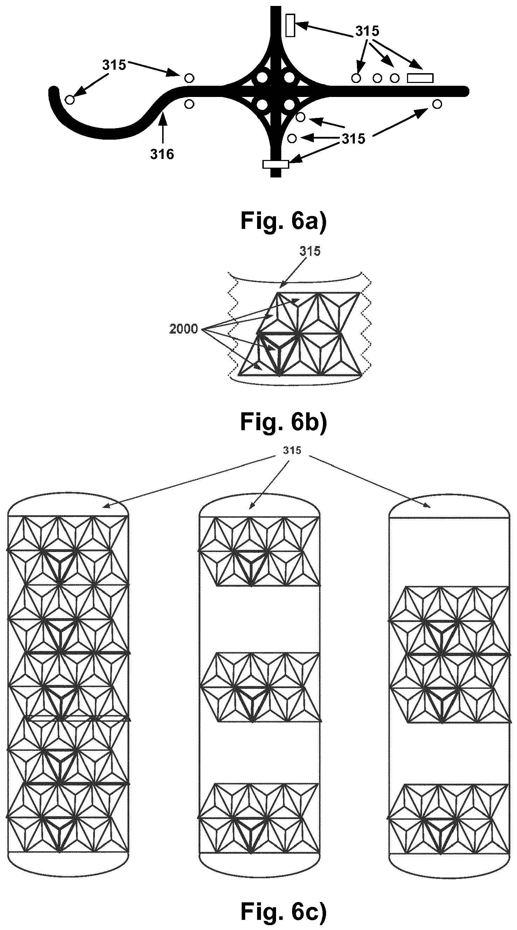

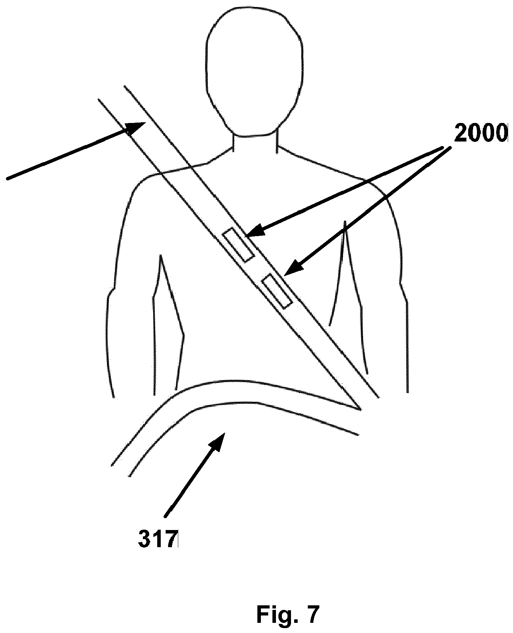

This invention proposes a system having apparatus part **100** and apparatus part **2000,** as well as the method of operation, being able:
- To detect distance to the known predefined object with orientation of the known object, meaning 3D orientation changes of the known object. This application scenario is shown in the **Fig. 1****.**
- To provide guiding of the vehicle through position of the known objects in known marked area, like: garages, parking spaces and similar environment. This application scenario is shown in the **Fig. 2****.**
- To provide selection and recognizing of the different shapes of the marked objects, over different classes of the marked objects, where the object are on the similar or same distance to the point of observation, which allows application like smart crane detection, where the crane or smart robot select one of the preferred marked objects and execute actions upon. This application scenario is shown in the **Fig. 3****,** and **Fig. 4****.** In **Fig. 4** the object is human being with marked cloths.
- To provide increased radar cross sections of the object, which may improve the safety, and detection of the object, for application where for example radar for blind spot detection is recognizing the vehicle more easily, within larger distances, as if the proposed system is not deployed. This may improve safety in autonomous driving, car to car communication and driver assistance application families. This applies specially for cases where the vehicles are not in the same lane and the classic radar system is observing situation and looking for car in the vicinity, which due to the angle have reduced cross section. This application scenario is shown in the **Fig. 5****,** where the bumper of the vehicle at its corners has solution with increased enlarged cross sections, as today state of art solution in vehicles, where artificial marking of the car with increased cross section is not utilised and used.
- To provide traffic infrastructure passive marking, which may increase the quality of the global navigation and vehicle awareness position, with provide additional redundancy in positioning and better quality of the autonomous driving navigation, or navigation under bad visual conditions like fog, by using existing sate of art automotive radar systems. This application scenario is shown in the **Fig. 6****.**
- To provide information if the safety belt is fasten in the vehicle or not. Safety belt has passive reflectors embedded inside, and reflected waves in known are of human chest gives information if the belt is fasten or not, described in **Fig 7****.**

Generally, the features of the proposed system address objects also as human beings having marked cloths, in its generalised meaning.

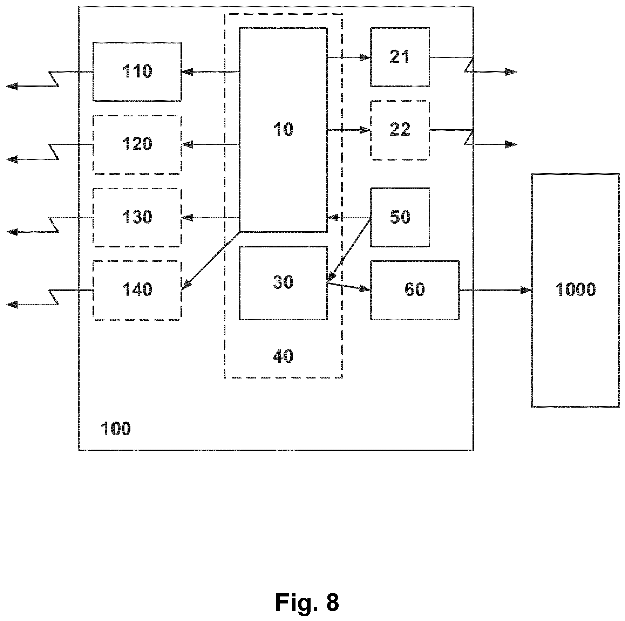

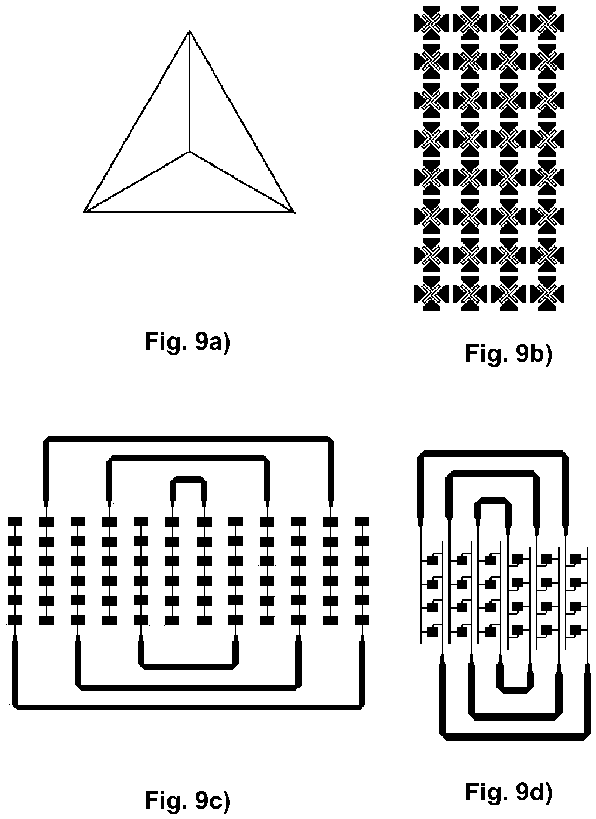

The basic features of the apparatus **100** are described in the **Fig. 8****.** Apparatus **100** is radar system having at least one transmitter and two receiver chains with high gain antennas, being connected to the vehicle infrastructure **1000,** and being realised by the arbitrary technology solutions. The apparatus **2000** is passive system with the arbitrary realisation options, where passive means that the apparatus **2000** does not have power supply, where the apparatus **2000** has a feature that the incident radio waves to the apparatus receiving surface are reflected by approaching apparatus **2000** in the same angle as received. In the proposed invention apparatus **2000** can reflected the waves in the same polarisation as received or in orthogonal radio waves polarization. In the **Fig. 9** different apparatus **2000** realization options are outlined, being realized by metalized corner reflectors, or printed planar structures, without and with changing of the incident radio waves polarisation.

By observing specific object by radar system, the total reflected energy to the radar systems is dependent on the level of the scattered waves in other directions as the direction of the incident waves. Due to the fact, that if the radar is receiving antennas and on the same place where transmit antennas are, the receiving power level from specific reflections is dependent of the level of scattering waves. If the object, would have features to reduce parasitic scattering and would reflect more power in the directions, where it is illuminated, its effective radar cross section would be larger, and receiving antenna at the radar will register more receiving power. With other words object having features for having less parasitic scattering and better reflection of the illuminated radio power to the direction of the illumination is better visible in the radar signal processing, compared to the environment in its enclosure without this feature. Even if the environment has metalized surfaces, the visibility of is larger, if waves may be reflected in the same way where the illumination of the signal is presented.

In the proposed invention we are proposing system having on one side active radar apparatus **100** illuminated known object being intentionally marked with one and more than one apparatus **2000,** having feature to reflect the waves coming from the apparatus **100,** back to the apparatus 100. That means if we know the object, we can intentionally mark it, with the specific and pre-defined position of the three apparatuses **2000,** which are not in the same line. If this system does not move, the apparatus **100** can detected the angular position of the three apparatuses **2000,** which due to the known object and known position of the markers on the known object, may allow us to calculate orientation of the object, like shown in the **Fig. 1****.** If the object under observation would have rotation at the same distance, the innovative proposed system would have ability to detect rotation and position in contrast to state of art radar systems, calculating distance with radar cross section classifications. Today, reflectors for increasing radar cross sections are used to increase the visibility of the objects by long range radar observation, like better visibility of the floating and sailing objects on the see. In this innovative solution proposed markers with better reflection are inertially use to detect orientation of the know object, rather to distance. They are also use for the purpose of detecting object shapes and object classification within different classes of marked objects. The important advantage of the proposed system and method of operation is that the proposed system allows recognising the objects, its position or classification, also in the case where the object is reflecting waves strongly, being made from metalized structures or having in its enclosure and environment a lot of metalized structures.

The key system-relevant components of the proposed apparatus **100** are:
- High-gain planar antenna system, realized by the plurality of the technologies, with at least one receiving antenna system **110, 120, 130, 140** and at least one the transmit antenna systems **21** and **22** each of them having more than one antenna radiation elements, and operation in the mm-wave frequency band.
- Millimetre-wave radar with integrated front end on silicon **10,** system on chip, providing analog processing of the mm-wave signal, and the provision of the analog to digital conversion functionality;
- Digital signal processing functionality **30**
- Mechanical assembly with power supply interface to power supply infrastructure in the vehicle or front seats, containing mechanically integrated antenna, digital and analog functionalities and having mechanical connection to the vehicle or seat infrastructure
- Supporting circuitry **50** as a part of apparatus **100** may include functionalities like light warning source, by the plurality of the realization options
- Interface sub-system **60** allowing connection to the vehicle infrastructure **1000.**

The choice to use the mm-wave frequency band (30 GHz to 300 GHz) and advantageously to use non-licenced 60 GHz band, ISM 60 GHz Band and 79 GHz Automotive band, is mainly related to the size of the antenna system allowing very small and compact device, even though it contains the high-gain antenna with more than one radiation elements. Usage of higher frequencies enables to have on predefined object more apparatuses **2000,** where their radiation size is minimum 10 X 10 wavelengths under operation, for the practical realization purposes and for enhanced reflectiveness. Due to mm-wave frequencies in the practical applications advantageously more than one apparatus **2000** are utilized.

Following operation steps, being part of the proposed method of operation are executed:
- Apparatus **100** is sending ways toward the object. In major application scenario, the distance to the known object under observation is known, or detected by the classic radar approach using FMCW operation or pulsed based operation. The object under illumination has known distribution of known at least one of the apparatuses **2000.** The apparatuses **2000** are increasing reflection of the illuminated waves which are received by the receiving part of the apparatus **100.**
- In one scenario, like described by **Fig. 1****,** the apparatus detects angular information to three known apparatuses **2000,** which allows to calculate 3D orientation of the known object under observation.
- In the second scenario, like described by **Fig. 2****,** the apparatus **100,** being on the vehicle, moving in the known and pre-defined environment, detects angular information and distance to known set of apparatuses **2000,** each having known positions, which allows to navigate the vehicle inside the pre-defined environment.
- In the third scenario, like described by **Fig. 3****,** the apparatus **100,** is observing the set of different class of marked object each having specific pre-defined positions of the apparatuses **2000,** and apparatus **100** is calculating the angular position of apparatuses **2000,** and recognising its predefined pattern of orientation, which leads to the detection of the object classification.
- In the fourth scenario, like described by **Fig. 4a****,** the apparatus **100,** is observing object which is in predefined distance. If on the known class of the objects on its surface the proposed apparatus **2000** is placed, the increased reflection is registered, so that apparatus **100** can differentiate with known object with marking or without marking. Practically that means if the specific checking area the person with cloths, having integrated marker in cloths is registered as marked and person without apparatuses **2000** as not marked. This may identify not marked person, as intruder and may provide safety and security relevant information.
- In the fifth scenario, like described by **Fig. 4b****,** the apparatus **100,** is observing object which is in predefined distance. The object of the same or similar size is marked with at least two apparatuses **2000,** having different geometrical orientations. Each class of the same object has own orientation. The apparatus **100** can detect the angular position of the apparatuses **2000,** and calculate and recognize the class of the object. Practically that means if the specific checking area the person with cloths, having at least two integrated marker in cloths with different orientation, are present, the system may provide identification of their class. Theoretically only with two apparatuses **2000,** almost undefined number of the identification classes of object may be generated, which theoretically may allow, personal identification with passive means on the distances being larger as state of art RFID systems, or identification of the personal. For example, only specific trained and marked personnel is able to manipulate and drive specific machine in the specific environment. This method may provide safety and security relevant information.
- In the sixth scenario, like described by **Fig. 5****,** the apparatus **100,** is placed on the vehicle or in the traffic infrastructure and it is observing known object classes, like moving vehicles in the specific angle of observation. In the state of art application if the vehicles are observed by radar system from the side with the angle less than 90 degrees the reflected ways after not so strong. It is proposed to integrate in the vehicles embodiment, especially on the vehicle corners, intentionally apparatuses **2000,** to increase the radar cross section, which may dramatically enhance visibility, and detection range, and significantly improve the autonomous driving and traffic control generally. If the vehicle has two corners on one side being illuminated by apparatus **100,** which have integrated two sets each having more than one apparatuses **2000,** for example front right corner bumper and rear right corner bumper, the apparatus **100** will detect angles and distances to reflector areas and detected the car orientation and position. If the other application, where apparatus **100** is on the vehicle being blind spot detection, it observes the area where more than apparatuses **2000** are incorporated in rear bumper corner of the car being behind and in the left lane of the moving vehicle with apparatus **100.** In that case apparatus **100** can detect the vehicle in its blind spot at much higher distance as state of art blind spot radar sensor detector. Proposed innovation therefor may have significant safety impact.
- In the seventh application scenario, like described by **Fig. 6****,** apparatus **100** is integrated in the vehicle, being involved in the traffic. The apparatus **100** is illuminated pre-defined area being lateral to driving directions or above driving directions. Apparatuses **2000** are in more than one arrangement, placed on not movable predefined positions on pre-defined objects **315** being part of the traffic infrastructure. The apparatus **100** is by driving detecting existence of the objects **315,** due to very strong radar cross sections and calculating information for more precise position detection of the vehicle, which bring navigation information redundancy, which may be also in case of the bad visible conditions helpful. If the sets of more than one apparatus **2000** are placed with the specific object **315,** like in **Fig.** 6c, extra information for navigation enhancements or warning traffic capability is communicated. So predefined sets of reflectors will send information to the vehicle through calculation of the apparatus **100,** at very large distance, that for example the crossing is in 500 meters, and its may work independently of the environment weather situation like in case of fog, and send storms, where video navigation, and legal information system may suffer.
- pre-defined area being lateral to driving directions or above driving directions. Apparatuses **2000** are in more than one arrangement, placed on not movable predefined positions on pre-defined objects **315** being part of the traffic infrastructure. The apparatus **100** is by driving detecting existence of the objects **315,** due to very strong radar cross sections and calculating information for more precise position detection of the vehicle, which bring navigation information redundancy, which may be also in case of the bad visible conditions helpful. If the sets of more than one apparatus **2000** are placed with the specific object **315,** like in **Fig.** 6c, extra information for navigation enhancements or warning traffic capability is communicated. So predefined sets of reflectors will send information to the vehicle through calculation of the apparatus **100,** at very large distance, that for example the crossing is in 500 meters, and its may work independently of the environment wetter situation like in case of fog, and send storms, where video navigation, and legal information system may suffer.
- In the further application scenario, like described by **Fig. 7****,** apparatus **100** is integrated in the vehicle infrastructure **1000.** The apparatus **100** is illuminated specific seat **317** and detected seat occupancy, by evaluating existing vital patterns, and at least one passive apparatuses **2000** is integrated in the safety belt. If the apparatus **100** is detected the human being the vehicle system is initialising the checking existence of at least one of the apparatuses **2000** in the field of illumination close torn the centre of the seat, which is corresponding to the fact that the safety belt is locked.

### Brief Description of Drawings

- **Fig. 1**: presents first class of proposed system application scenarios:
**Fig.1a****)** where the apparatus **100** is mm-wave radar system observing known object market with apparatuses **2000** being attached to the known object on its surface facing mm-wave radar apparatus **100,** where apparatuses **2000** are passive metal coated or metal structures of the specific shape, and they are positioned to geometrically may define virtual geometrical plane.
**Fig.1b****)** proposed system is able to calculate the distance of the know object to apparatus **100** and its 3D orientation in the space, using proposed method of operation
- **Fig. 2**: presents second class of proposed system application scenarios, where the autonomous driving in known environment is performed, where the enclosure for driving is marked with proposed apparatuses **2000** on the walls or on specific areas positions in the pre-defined and known area, where the radar sensor **100** is in the moving object approaching and moving inside the known area. The environment may be advantageously parking space or garage environment.
- **Fig.** 3: presents third class of proposed system application scenarios, where apparatuses **2000** are positions on the specific surface of the different known objects, in different geometrical shape allowing their classification and identification, being observed by the apparatus **100,** where apparatus **100,** purpose is to identify the existence, position and 3D of the specific shapes class of objects.
- **Fig. 4**: presents forth class of proposed system application scenarios, where:
**Fig.4a****)** where the proposed system differentiates by observing person in specific position if the person is having cloths with integrated apparatus **2000** and person does not having cloths with integrated apparatus **2000.**
**Fig.4a****)** where the proposed system differentiates by observing person in specific position, if the person is having cloths with integrated apparatuses **2000** and person having cloths with more apparatuses **2000,** or the same number of apparatuses **2000,** but with different positions.
- **Fig. 5**: presents fifth class of proposed system application scenarios, where:
**Fig.5a****)** where the proposed system is used to increase intentionally the radars cross sections of the vehicle in the specific critical direction like vehicle corners. This allows that the blind spot detection systems of other vehicle can recognise vehicle with integrated apparatus **2000,** at much more distance or with critical environment situation with much more probability of detection, which directly improves overall safety in autonomous driving.
**Fig.5b****)** where the sets of more than one apparatus **2000** are existing behind vehicle plastic enclosure.
**Fig.5c****)** where behind plastic coating of the bumper, 3D plastic parts with specific metallic coating are realized to get in cost effective way the sets of proposed apparatuses **2000.**
- **Fig. 6**: presents sixth class of proposed system application scenarios, where:
**Fig.6a****)** where the proposed system is used to enhance traffic road navigation, by placing navigation enhancement objects **315** along the roads, and aside the road lines.
**Fig.6b****)** where the navigation enhancement objects **315** has more than one apparatuses **2000.**
**Fig.6c****)** where the navigation enhancement objects **315** has more than one groups of the apparatuses **2000,** being able to transmit to the radar system specific coded message, related to the traffic.
- **Fig. 7**: presents the seventh class of the proposed system applications, where the proposed system is applied for the seats without necessary needs for power supply, where the proposed system is detected simultaneously if the seat is occupied and if the safety belt is locked, where ate late one apparatus **2000** is integrated in the safety belt.
- **Fig. 8**: presents functional blocks of the proposed Apparatus **100**
- **Fig. 9**: presents possible realisation options of the Apparatus **2000,** where:
**Fig. 9a****)** presents metalized corner structure
**Fig. 9b****)** presents planar passive printed structure changing polarization of reflecting waves in the same direction of incident waves arrival
**Fig. 9c****)** presents planar passive printed structure realized by patch type of antennas
**Fig. 9d****)** planar passive printed structure realized by patch type of antennas changing polarization of reflected waves in the same direction of incident waves arrival

### Description of Embodiments

mm-Wave System comprising the one apparatus **100** with mm-wave HW radar functionality, and at least two apparatuses **2000** being is placed physically at the distance from apparatus **100,** where mm-wave declares operation between 30 and 300 GHz like in **Fig 1****.** Apparatus **100** contains:
- At least one high-gain planar antenna for transmitting mm-wave radio signals **21,** where the high-gain planar antenna has at least two radiation elements;
- At least one high-gain planar antenna for receiving mm-wave radio signals **110,** where the high-gain planar antenna has at least two radiation elements;
- Integrated mm-wave radio front end **10,** implemented in arbitrary semiconductor technology, having on-chip integrated mm-wave voltage control oscillator, mm-wave power amplifier, at least one mm-wave IQ demodulator, digital control interface, power supply;
- Digital processing functionality **30** with arbitrary hard wired and SW digital processing capability, being able to digitally process the signal coming out of the entity **10,** including controlling functionality and calculation and memory capacity for performing digital signal processing by arbitrary type of the realization options
- Wired communication interface **60** to connect first Apparatus **100** to the infrastructure entity **1000,** being outside the apparatus **100,** being released by the plurality of the technologies and communication protocols
- Supporting circuitry **50,** including mechanical interface to infrastructure environment **1000,** where the first Apparatus **100** is connected to the infrastructure environment, and supporting electronic circuitry for provide the power supply from the vehicle environment **1000** to the first apparatus **100.**
where the second apparatus **2000** is a passive, without power supply, and without capability of charging by the illumination of the mm-waves being released by plurality of realization options, having a key feature to reflect the incident mm-wave waves coming from apparatus **100,** in the same direction, where mm-waves are approaching the apparatus **2000.**

At least two apparatuses **2000** are attached to the known and pre-defined object **300.** The Method of operation related to the Fig. 1 contains three steps, where the first operation step has following sub-set of operations:
- placing at least two apparatuses **2000,** at the surface of the known object **300,** where the surface of the object **300** is in the direction of the illumination of the apparatus **100,** and where the apparatuses **2000** are placed at the largest possible distance one from the another, where the its geometrical distance is predefined and known. If we place three apparatuses **2000,** not being in one line on the surface of the known object **300,** we have full sets of information to detect the object **300** orientation if the plane being defined by the places of positioning three apparatuses **2000** changes its positions.
where the second operation step has following sub-set of operations:
- Transmission of mm-wave signals generated in **10** using **21;**
- Receiving mm-wave signals reflected from observation area using at least **110** and at least **120** receiver chains;
- Digital signal processing of the signal in **30,** by detecting position of each apparatus **2000,** where the position definition can be reduced to angular position definition of each apparatus **2000,** if the distance **500** and **501** is not changing. If the distance is changing, we need to calculate the distance by calculated three distances to the marked objects. If the possible movement of the object **300** is limited to the one rotation or other type of one way of freedom movement, two apparatuses **2000** would be enough for the detecting and characterizing the movement of the known object **300.** If the full 3D movement may appear, the angular and distance position for at lest three attached apparatuses would need to be calculated, which would mean that all for receiver for special angle detections to the apparatuses **2000** would be required.
- Information of the position of each apparatus **2000** is optionally communicated to the infrastructure environment **1000,** by means of entity **60**
where third operation step being executed after the second operation step, has following sub-set of operations:
- Having position of the apparatuses **2000** calculated and having its known geometrical position of the illuminated surface of the known object **300,** the entity **30,** will calculate 3D position of the known object **300,** meaning object **300** orientation, being defined by the angles **502, 503,** and **504,** as well as the distance **501,** if **501** changes.
- Information of the 3D position of the known object **300** is communicated to the infrastructure environment **1000,** by means of entity **60.**

In the praxis proposed system and method operation could be applied to the class of applications, where for example the sensor is monitoring orientation of the moving object doing translation movements and rotation in one plane having constant distance to the sensor. The proposed scenario will work also in case when the moving platform, being assessed from the top has metal parts or the area where the moment is happening contact metal parts. The today based radar sensor would have difficulties to detect the movement of the object, in virtually same distance to the senor.

In the **Fig. 2** application scenario related to the autonomous driving in the pre-defined area like parking spaces and garages are described. We have installed apparatuses **2000** in the specific known positions in the known area of vehicle movement. The vehicle **301** is entering parking area and has apparatus **100** on the board looking in the direction of the vehicle movement. The apparatus **100** detect the existence of the passive apparatuses **2000.** The apparatus **100** is detecting angular positions and distances to the passive apparatuses **3002** and **300,** and the vehicle autopilot is calculating the trajectory **2001,** so that the vehicle **3001** is autonomous or manually driven by driver with warning assistance from the markers calculate or take, respectively trajectory **2001** being in the middle between the apparatuses **3001** and **3002.** The vehicle system knows which specific parking space is entered, and the vehicle navigation system has this information, including the distances between the apparatuses **2000** and their positions in the parking and moving area. As the vehicle **301** is moving between the parked cars **302** and **303** they are approaching apparatuses **3003** and **3004** being attached to the wall. Having their positions being calculated by apparatus **100,** the vehicle **301** can park exactly in the middle of the parking space and at exact prefer distance to the wall. We are proposing using practically enhanced radar cross sections and clear visibility of the apparatuses **2000** in the radar signal being received by the apparatus **100,** much better as in the case when the apparatuses **2000** were not present.

**Fig. 3** describes the third application scenario being related to the detection of the class of the pre-defined and known objects. Those classes of the object are for example denoted as **304, 305, 306** and may have other outlooks like class of simply quadratic type of shapes. For example, if we have a harbour and crane looking from the top to the down, the crane will see different type of the objects. If these objects are marked by the attachment of the apparatuses **2000,** the crane having apparatus **100** looking top to the down, will recognized shapes below the carne, and make take different type of actions, like move one shape by detecting it from one place to another. Moreover, if we have for example metal container being marked from the top by fort apparatuses **2000** or group of apparatuses **2000,** the crane may align its picking precision very preciously due to the attached 4 group of markers to pick up the container in the proper ways, autonomously. As a second feature of the proposed system in this application scenario we may observe the known object **306,** which may be a cylinder. Through smart positions of the apparatuses **2000** and their detection we may also combine the shape detection with the orientation of the object to the crane. In this particular case we may see if the cylinder are rotated and with which angle.

**Fig 4** show application scenario, where proposed passive apparatuses **2000** or a group of apparatuses **2000** are integrated in the clothing of the people intentionally. Having apparatuses being integrated in the cloths, will increase the radar cross section, or in other received signal after radar illumination will be stronger as a signal coming by the same person on the same distance and same scenario but without having one or more apparatuses integrated in the cloth. We are proposing usage of the integrated apparatuses **2000** in the cloths by the class of the people, having allowance to be qualified to be on the special places under observation. The practical application is that the person being temporary or permanently on the specific place under radar-based observation, with apparatus **100,** being integrated with the environment infrastructure, is checked to have cloths being approved for a person being on the specific place. So the system may "see" that a human being is on the specific place, but can further confirm that this person is using clothes, giving him permission to be on the specific place. This approach can improve safety and security in the private or government environments. The Fig 4b) show further case that different classes of the groups of the apparatuses **2000** are integrated in the cloths of the people. Being assigned for specific public for private control environment. With this proposed application scenario, the system may control for example if the person is allowed to be in the specific place, by working specific assigned cloths, and after that to make further classifications, to selected for example if the people working in specific organisation are allowed to access specific areas assigned to their class of duties. In the scenario **Fig. 4b** two apparatuses **2000** or two group of the apparatuses **2000,** denoted as **3008** and **3009** are integrated in the cloths. After illumination by the apparatus **100,** the apparatus **100,** will have calculated firstly that the receiving signal is stronger for the specific distance, compared to case when no apparatuses **2000** are in cloths, and the system may conclude that the person is part of the crew working for organisation. In the second step the systems will calculate the angles to the group of the apparatuses and will match the calculated data with the pre-defined class of the patters being memorized in the system and decide to which class of the crew is present, and possibly if the specific crew members are eligible to be on the specific place and in the specific time. This type of the information can be helpful for increasing the safety and security of organizations, with inexpensive means. To select among the two type of geometrical positions of the apparatuses **2000,** apparatus **100** would need to have at least two receiver changes **110** and **120,** being able to detect angles in one plane for example.

**Fig. 5** introduces further application scenario. In the **Fig. 5a** vehicle environment **311** is shown. Use case of the bumper **309** as a part of the vehicle **311** is considered. One part of the bumper **310,** preferable the part of the corner, contains more than one apparatuses **2000,** like seen in the **Fig. 5b. Fig. 5c** shows an realization option how the apparatuses **2000** could be realized by metalized plastic coating **313** on plastic material **314,** hidden after plastic material of the bumper. The clear advantage of the approach is that the vehicle having apparatuses **2000,** have better cross section as the vehicle without integrated apparatuses **2000,** which plays significant role exactly in cases where the radar-based illumination is coming with sharp angle to the corner of the car. The typical use case is blind spot detection where moving vehicle is watching the vehicle on the neighboured traffic line, illuminated exactly the corner of the passing vehicle. By having proposed set of apparatuses **2000** being interrogated in the vehicle nevirapine, preferable on the bumper corner, the observing blind spot detection radar system will obtain significantly stronger signal as in case of not having apparatuses **2000** being integrated in the observed vehicle. This may increase the sensitivity in the observing blind spot detector significantly and therefore improve the safety in the traffic. By integrated apparatuses **2000** in more and more surface of the vehicle environment overall radar cross section and radar general visibility by apparatus **100** will be increased. The apparatus **100** of the proposed system can be advantageously be blind spot detection, but also in case or rear radar monitoring and in case of front radar monitoring role, the system performance improvement, regarding radrd sensitivity, and detection range will be increased. The third proposed application scenario is that the apparatus **100** is used as part of the traffic infrastructure monitoring system. In that case also in very bead weather condition and in full fog environment the traffic control system many work with the extended sensitivity by monitoring traffic and passing vehicles, if those vehicles would have proposed integrated apparatuses **200** in their embodiment.

**Fig 6** Is showing newly proposed applications scenario with the innovative system. It is proposed to place close to the traffic roads known object **315,** having pre-defined and known positions, having arbitrary shape, and arbitrary positions close to the road, beside the traffic lanes and across the traffic lanes, like shown in **Fig.6a****.** Prosed known objects **315** have a sets of at lest two and preferably as much as possible apparatuses **2000** being integrated in the object **315.** The basic idea of introducing the known object **315,** with known positions is to provide navigation redundancy, and increase the local accuracy of the vehicle positioning, which could be important especially in case of the autonomous driving. By passing close to the specific known object, and illuminated them by the apparatus **100,** being integrated in the moving vehicle, reflected waves from the known objects **315,** will act as navigation beacon to the moving vehicle system. Those reflected ways will differentiate significantly for other reflection and will be due to large cross sections recognised as enhancement to the navigation and local positioning of the moving vehicle. Having reflection from the object **315,** apparatus **100** may calculate the distance to the object, and since the position of the object **315** is known, the system will determinate the position, which may be used in sensor fusion manner for the positioning enhancement. In the case of total fog, where the video system cannot be used, and lidar system has limited observation range, the proposed infrastructure-based solutions of the known object **315** will be very valuable. Radrd system may detect those objects at very large distances and recognize them as navigation beacons. This may enhance safety of the autonomous driving. **Fig. 6c** shows special case of the deployment of the known objects **315,** where the groups of the apparatuses **2000** are used. The positioning of the group of the apparatuses **2000** within one object **315** may be detected by the apparatuses **100.** That means that known object **315** may be used also to send simple coded information related to the combination of the deployed group of apparatuses **2000.** That would mend that one each of the field having group of the apparatuses in case of having them are transmitted code 1 and in case of not having them the code 0. By this proposed methodology traffic infrastructure may send codded message to the radrd based system apparatus **100,** being in the moving vehicle. If we have 6 fields, we may have 6 digit binary word coding scheme, being recognized by the radar system in all wetter conditions. If the object **315** is along the road and long, the more comprehensive message may be generated, and with reflection sent to the moving vehicle by using proposed apparatuses **100** and sets of groups of apparatuses **2000.** For example, assotiated walls and sound protection walls along the traffic lines, may have apparatuses **200** signalling that the crossing is coming at the specific distance. If the sets of the apparatuses **2000,** within the known object **315,** may be mechanically moved in one of the several positions of the "0" and "1" filed the message to the incoming cars having apparatuses **100,** can be sent dynamically, which could dramatically improve the safety in the autonomous driving, by introducing additional communication way from the infrastructure to the moving vehicle.

Furthermore, to described applications, where proposed system, being defined through its apparatuses and method of operation, is used, the calculated information and events may be used for the statistical evaluation of the data.

This includes:
- Statistic evaluation of the object positions mapped with data being used for the calculation, providing profiling of the events and measured objects.
- Statistic evaluation of the object class being recognized, with the data being used for the calculation, to enable machine learning in recognizing the data with better accuracy
- Counting of the object or class of object being detected
- Statistic evaluation of the observed object classes

By using artificial intelligence algorithmics, with machine learning in the place, the proposed system, being defined by its apparatuses and methods of operations, can be advantageously used for moving robots and machines, in industrial and daily life environments.

By using artificial intelligence algorithmics, with machine learning in the place, the proposed system, being defined by its apparatuses and methods of operations, can be advantageously used for autonomous driving.

By using artificial intelligence algorithmics, with machine learning in the place, the proposed system, being defined by its apparatuses and methods of operations, can be advantageously used for updating real time mapping data, where vehicle has on the board apparatus **100,** and apparatuses **2000** are positioned close or across the roads.

Further examples and aspects are found in the following numbered clauses:
**Clause 1:** mm-Wave System comprising the one apparatus **100** with mm-wave HW radar functionality, and at least two apparatuses **2000** being placed physically at the distance from apparatus **100,** where mm-wave declares operation between 30 and 300 GHz,
   where first apparatus **100** contains:
   - At least one high-gain planar antenna for transmitting mm-wave radio signals **21,** where the high-gain planar antenna has at least two radiation elements;
   - At least one high-gain planar antenna for receiving mm-wave radio signals **110,** where the high-gain planar antenna has at least two radiation elements;
   - Integrated mm-wave radio front end **10,** implemented in arbitrary semiconductor technology, having on-chip integrated mm-wave voltage control oscillator, mm-wave power amplifier, at least one mm-wave IQ demodulator, digital control interface, power supply;
   - Digital processing functionality **30** with arbitrary hard wired and SW digital processing capability, being able to digitally process the signal coming out of the entity **10,** including controlling functionality and calculation and memory capacity for performing digital signal processing by arbitrary type of the realization options
   - Wired communication interface **60** to connect first Apparatus **100** to the infrastructure entity **1000,** being outside the apparatus **100,** being released by the plurality of the technologies and communication protocols
   - Supporting circuitry **50,** including mechanical interface to infrastructure environment **1000,** where the first Apparatus **100** is connected to the infrastructure environment, and supporting electronic circuitry for provide the power supply from the vehicle environment **1000** to the first apparatus **100.**
   where the second apparatus **2000:**
   - is a passive, without power supply, and without capability of charging by the illumination of the mm-waves being released by plurality of realization options, having a key feature to reflect the incident mm-wave waves coming from apparatus **100,** in the same direction, where mm-waves are approaching the apparatus **2000.**
   - where at least two apparatuses **2000** are attached to the known and pre-defined object **300.**
**Clause 2:** System according to **Clause 1,** where
   - where at least two apparatuses **2000** are attached to the known and pre-defined apparatus **2000** positions inside known and pre-defined environment for vehicle **301,** movement and parking.
**Clause 3:** System according to **Clause 1,** where
   - where are least three apparatuses **2000** are attached to the known and pre-defined at least two classes of known object classes **304** and **305,** where they are placed on the each object surface in the way to define unique combination of the shape, allowing object class recognising, by recognising unique positions of the apparatuses **2000** at the object classes surface.
**Clause 4:** System according to **Clause 1,** where
   - where ate least one apparatus **2000** are attached to cloths of the human being **307,** allowing its marking, and stronger radar cross sections reflection on the predefined distance to the apparatus **100,** as compared to the case where at the same distance related marking is not present **308.**
**Clause 5:** System according to **Clause 1,** where
   - where ate least one apparatus **2000** are attached to cloths of the human being **307,** and human being **308,** allowing its marking, in the way that they have different geometrical positions on the cloths, allowing apparatus **100** to detected at least two different geometrical positions of the apparatuses **2000.**
**Clause 6:** System according to **Clause 1,** where
   - where ate least two apparatus **2000** are attached, dense one to another and integrated in the vehicle environment infrastructure **311** and **310,** to ensure larger radar cross section, as in the case if they are not present, being illuminated by apparatus **100,** where apparatus **100** is on the other vehicle platform.
**Clause 7:** System according to **Clause 6,**
   - where apparatus **100** is on the other static traffic infrastructure, observing and illuminated by mm-waves the vehicle **311,** having integrated apparatuses **2000.**
**Clause 8:** System according to **Clause 1,**
   - where ate least two apparatus **2000** are attached, dense one to another and integrated in the static traffic infrastructure known objects **315,** with known exact positions, close to the traffic roads **316,** to ensure larger radar cross section, as in the case if apparatuses **2000** are not present on object **315,** being illuminated by apparatus **100,** where apparatus **100** is on the moving vehicle platform, and where the known objects **315,** are arbitrary shape and size and arbitrary but known micro position related to the traffic roads **316.**
**Clause 9:** System according to **Clause 8,**
   - where ate least two groups of apparatuses **2000,** each group having more than two apparatuses **2000,** are realized on the known objects **315,** being able by the illumination by the apparatus **100,** with the same distance to the object **315,** to generate clear differentiation in the receiving signal pattern, able to differentiate different class of objects **315,** depending of the geometrical arrangements of the groups of apparatuses **2000,** between them.
**Clause 10:** System according to **Clause 1,**
   - where ate least one apparatus **2000** is integrated in the safety belt, which is part of the vehicle seat **317,** and where apparatus **100** is illuminating vehicle seat **317,** being integrated in the vehicle environment and connected to the vehicle infrastructure **1000.**
**Clause 11:** Method of operation, utilizing the System being described in **Clause 1** where method of operation comprising three operation steps: "marking of the known object" being declared as a first operation step, "position detection of each apparatus **2000,** by apparatus **100"** being declared as second operation step, to be executed after the first step is executed, and "method for calculation of the 3D position of the known object **300",** being declared as third operation step to be executed after the second step is executed,
   where the first operation step has following sub-set of operations:
   - placing at least two apparatuses **2000,** at the surface of the known object **300,** where the surface of the object **300** is in the direction of the illumination of the apparatus **100,** and where the apparatuses **2000** are placed at the largest possible distance one from the another, where its geometrical distance is predefined and known
   where the second operation step has following sub-set of operations:
   - Transmission of mm-wave signals generated in **10** using **21;**
   - Receiving mm-wave signals reflected from observation area using at least **110** and at least **120** receiver chains;
   - Digital signal processing of the signal in **30,** by detecting position of each apparatus **2000,** where the position definition can be reduced to angular position definition of each apparatus **2000,** if the distance **500** and **501** is not changing.
   - Information of the position of each apparatus **2000** is optionally communicated to the infrastructure environment **1000,** by means of entity **60**
   where third operation step being executed after the second operation step, has following sub-set of operations:
   - Having position of the apparatuses **2000** calculated, and having its known geometrical position of the illuminated surface of the known object **300,** the entity **30,** will calculate 3D position of the known object **300,** meaning object **300** orientation, being defined by the angles **502, 503,** and **504,** as well as the distance **501,** if **501** changes.
   - Information of the 3D position of the known object **300** is communicated to the infrastructure environment **1000,** by means of entity **60**
**Clause 12:** Method of operation, utilizing the System being described in **Clause 2** where method of operation comprising three operation steps: "marking of the known vehicle moving environment" being declared as a first operation step, "position detection of each apparatus **2000,** by apparatus **100"** being declared as second operation step, to be executed after the first step is executed, and "method for calculation of the vehicle **301** trajectory moving within known and marked environment", being declared as third operation step, to be executed after the second step is executed,
   where the first operation step has following sub-set of operations:
   - placing at least two apparatuses **2000,** at the predefined positions of the known area to be used by the vehicles **301, 302, 303,** surface of the apparatus **2000** are in the direction of the expected illumination of the apparatus **100,** and where apparatus **100** is integrated in the moving vehicle **301**
   where the second operation step has following sub-set of operations:
   - Transmission of mm-wave signals generated in **10** using **21**;
   - Receiving mm-wave signals reflected from observation area using at least **110** and at least **120** receiver chains;
   - Digital signal processing of the signal in **30,** by detecting position of each apparatus **2000,** in the illumination area, in front of the moving vehicle trajectory **2001,** of the vehicle **301,** where the position definition can be reduced to angular position definition of each apparatus **2000,** due to the fact that their position in pre-defined environment is known
   - Information of the position of each apparatus **2000** is communicated to the vehicle **301** environment, by means of entity **60**
   where third operation step being executed after the second operation step, has following sub-set of operations:
   - Having position of the apparatuses **2000** calculated, and having its known position in the known area for moving vehicles, the vehicle system is calculating vehicle **301** position in the known vehicle movement area
   - The vehicle **301** is calculating the ongoing movement by calculating the vehicle trajectory, to avoid obstacles in the predefined known vehicle moving area, allowing optional autonomous driving of the vehicle **301** in the predefined known area.
**Clause 13:** Method of operation, like in **Clause 12** where the predefined vehicle moving environment is a parking facility.
**Clause 14:** Method of operation, utilizing the System being described in **Clause 3** where method of operation comprising three operation steps: "marking of the known object classes" being declared as a first operation step, "position detection of each apparatus **2000,** by apparatus **100"** being declared as second operation step, to be executed after the first step is executed, and "method for selection of the known object classes", being declared as third operation step, to be executed after the second step is executed,
   where the first operation step has following sub-set of operations:
   - placing at least three apparatuses **2000,** at the predefined known class of the objects **304** on the object surface in the direction of the expected illumination of the apparatus **100,** each class of the known object with different geometrical orientation of the apparatuses **2000**
   where the second operation step has following sub-set of operations:
   - Transmission of mm-wave signals generated in **10** using **21**;
   - Receiving mm-wave signals reflected from observation area using at least **110** and at least **120** receiver chains;
   - Digital signal processing of the signal in **30,** by detecting position of each apparatus **2000,** in the illumination area, of the objects under observation, where the position definition can be reduced to angular position definition of each apparatus **2000,** since their distance to the apparatus **100** could be known
   where third operation step being executed after the second operation step, has following sub-set of operations:
   - Having position of the apparatuses **2000** calculated, the environment system **1000** is calculating detected pattern of the positions of the apparatuses **2000,** identifying the class of the object under observation
   - The environment system **1000** is initiated further actions of the platform having apparatus **100,** depending of the identification of the pre-defined class of object.
**Clause 15:** Method of operation, like in **Clause 14** where the platform having apparatus **100** is crane and one of the class of pre-defined objects is container.
**Clause 16:** Method of operation, like in **Clause 14** where the platform having apparatus **100** is a robot.
**Clause 17:** Method of operation, utilizing the System being described in **Clause 4** where method of operation comprising three operation steps: "marking of the cloths of the human being" being declared as a first operation step, "position detection of each apparatus **2000,** by apparatus **100"** being declared as second operation step, to be executed after the first step is executed, and "method for selection of the known object classes", being declared as third operation step, to be executed after the second step is executed,
   where the first operation step has following sub-set of operations:
   - placing at least one apparatus **2000,** at the cloths of selected human being **307** on the object surface in the direction of the expected illumination of the apparatus **100,**
   where the second operation step has following sub-set of operations:
   - Transmission of mm-wave signals generated in **10** using **21**;
   - Receiving mm-wave signals reflected from observation area using at least **110** and at least **120** receiver chains;
   - Digital signal processing of the signal in **30,** by detected receiver power level
   where third operation step being executed after the second operation step, has following sub-set of operations:
   - Having receiver strength being calculated, the environment system **1000** is selecting if the human being in predefined distance area has marked cloths
   - The environment system **1000** is initiated further actions of the platform having apparatus **100,** depending of the identification of marked cloths.
**Clause 18:** Method of operation, utilizing the System being described in **Clause 5** where method of operation comprising three operation steps: "marking of the cloths of the human being" being declared as a first operation step, "position detection of each apparatus **2000,** by apparatus **100"** being declared as second operation step, to be executed after the first step is executed, and "selection of the marked cloth class", being declared as third operation step, to be executed after the second step is executed,
   where the first operation step has following sub-set of operations:
   - placing at least two apparatuses **2000,** at the predefined positions of the cloths of the human being in the direction of the expected illumination of the apparatus **100,** where the geometrical positions of the apparatuses **200** is different for each class of the marked cloths
   where the second operation step has following sub-set of operations:
   - Transmission of mm-wave signals generated in **10** using **21;**
   - Receiving mm-wave signals reflected from observation area using at least **110** and at least **120** receiver chains;
   - Digital signal processing of the signal in **30,** by detecting position of each apparatus **2000,** and its geometrical positions
   where third operation step being executed after the second operation step, has following sub-set of operations:
   - Having position of the apparatuses **2000** calculated, event of detection specific geometrical pattern being mapped to the specific class of marked cloths is calculated
   - The environment system **1000** is initiated further actions of the platform having apparatus **100,** depending of the identification of marked cloths.
**Clause 19:** Method of operation, utilizing the System being described in **Clause 6** and **Clause 7** where method of operation comprising three operation steps: "placing markers in the vehicles body" being declared as a first operation step, "reflection detection by apparatus **100"** being declared as second operation step, to be executed after the first step is executed, and "event detection", being declared as third operation step, to be executed after the second step is executed,
   where the first operation step has following sub-set of operations:
   - placing at least two apparatuses **2000,** in the vehicle body
   where the second operation step has following sub-set of operations:
   - Transmission of mm-wave signals generated in **10** using **21;**
   - Receiving mm-wave signals reflected from observation area using at least **110** receiver chain;
   - Digital signal processing of the signal in **30,** by detecting reflection at least two apparatuses **2000**
   where third operation step being executed after the second operation step, has following sub-set of operations:
   - Detecting the reflection and distance to the vehicle in the direction of the observation
   - The environment system **1000** is initiated further actions of the platform having apparatus **100**
**Clause 20:** Method of operation, utilizing the System being described in **Clause 8** where method of operation comprising three operation steps: "placing markers in the known object with known position close to traffic roads" being declared as a first operation step, "reflection detection by apparatus **100"** being declared as second operation step, to be executed after the first step is executed, and "event detection and position calculations", being declared as third operation step, to be executed after the second step is executed,
   where the first operation step has following sub-set of operations:
   - placing at least two apparatuses **2000,** in the known object **315** having known position
   where the second operation step has following sub-set of operations:
   - Transmission of mm-wave signals generated in **10** using **21;**
   - Receiving mm-wave signals reflected from observation area using at least **110** receiver chain;
   - Digital signal processing of the signal in **30,** by detecting reflection at least two apparatuses **2000**
   where third operation step being executed after the second operation step, has following sub-set of operations:
   - Detecting the reflection from the known object **315** and distance to the known object
   - Using relative distance to the known object, an known object position from the available navigation information from the vehicle, recalculate and enhance the position of the vehicle having apparatus **100.**
**Clause 21:** Method of operation, utilizing the System being described in **Clause 9** where method of operation comprising three operation steps: "placing group of markers in the known object with known position close to traffic roads" being declared as a first operation step, "group of markers detection by apparatus **100"** being declared as second operation step, to be executed after the first step is executed, and "event detection with position calculations", being declared as third operation step, to be executed after the second step is executed,
   where the first operation step has following sub-set of operations:
   - placing at least two groups each having at least two apparatuses **2000,** in the known object **315,** having known position
   where the second operation step has following sub-set of operations:
   - Transmission of mm-wave signals generated in **10** using **21;**
   - Receiving mm-wave signals reflected from observation area using at least **110** and **120** receiver chain;
   - Digital signal processing of the signal in **30,** by detecting reflection from the known object **315** and detection the positions of the group of apparatuses **2000**
   where third operation step being executed after the second operation step, has following sub-set of operations:
   - Recognising if more than one group of the apparatuses **2000** are presented on the known object **315** on its known position.
   - If the more than one group of the apparatuses are detected on the known object **315** calculate their relative positions
   - Encode the event being coded by the position of the groups of apparatuses **2000** on the known object **315**
   - Using relative distance to the known object, an known object position from the available navigation information from the vehicle, recalculate and enhance the position of the vehicle having apparatus **100,** and take the measures being related to the encoded event.
**Clause 22:** Method of operation, utilizing the System being described in **Clause 10** where method of operation comprising three operation steps: "seat occupation detection" being declared as a first operation step, "group of markers detection by apparatus **100"** being declared as second operation step, to be executed after the first step is executed, and "event detection with combined seat occupation and safety belt lock detection", being declared as third operation step, to be executed after the second step is executed,
   where the first operation step has following sub-set of operations:
   - Illumination of the vehicle seat **317** by the apparatus **100,**
   - transmission of mm-wave signals generated in **10** using **21**;
   - Receiving mm-wave signals reflected from observation area using at least **110** and **120** receiver chain;
   - and detection of the seat occupancy by the extraction of at least one of the vital signs, and in case of detection providing this information to the vehicle infrastructure **1000**
   where the second operation step has following sub-set of operations:
   - vehicle infrastructure **1000,** in case of positive seat occupation detection by human being, is initializing detection of the apparatus **2000** in the field of the apparatus **100** illumination by the apparatus **100**
   where third operation step being executed after the second operation step, has following sub-set of operations:
   - If the detection of the apparatus **2000** in the second operation step two is positive, this information is sent to the vehicle infrastructure **1000,** and vehicle infrastructure is initialising further actions, having information that the seat under observation is occupied by the human being and the human being has safety belt in the position determining safety belt locking.
   - If the detection of the apparatus **2000** in the second operation step two is negative, this information is sent to the vehicle infrastructure **1000,** and vehicle infrastructure is initialising further actions, having information that the seat under observation is occupied by the human being and the human being dies not have safety belt in the position determining safety belt is locked.
**Clause 23:** like in all previous clauses where the passive apparatus **2000** is realized as corner, having front side toward the illumination being metal coated, and being realized by the plurality of the realization options.
**Clause 24:** like in **Clauses 1-22,** where the passive apparatus **2000** is realized as printed planar structure, reflected ways in the same polarization as received.
**Clause 25:** like in **Clauses 1-22,** where the passive apparatus **2000** is realized as printed planar structure, reflected ways in the cross polarization as received.

## Claims

1. A mm-Wave System comprising the one apparatus **100** with mm-wave HW radar functionality, and at least two apparatuses **2000** being placed physically at the distance from apparatus **100,** wherein mm-wave declares operation between 30 and 300 GHz,
wherein first apparatus **100** contains:
• At least one high-gain planar antenna for transmitting mm-wave radio signals **21,** where the high-gain planar antenna has at least two radiation elements;
• At least one high-gain planar antenna for receiving mm-wave radio signals **110,** where the high-gain planar antenna has at least two radiation elements;
• Integrated mm-wave radio front end **10,** implemented in arbitrary semiconductor technology, having on-chip integrated mm-wave voltage control oscillator, mm-wave power amplifier, at least one mm-wave IQ demodulator, digital control interface, power supply;
• Digital processing functionality **30** with arbitrary hard wired and SW digital processing capability, being able to digitally process the signal coming out of the entity **10,** including controlling functionality and calculation and memory capacity for performing digital signal processing by arbitrary type of the realization options
• Wired communication interface **60** to connect first Apparatus **100** to the infrastructure entity **1000,** being outside the apparatus **100,** being released by the plurality of the technologies and communication protocols
• Supporting circuitry **50,** including mechanical interface to infrastructure environment **1000,** where the first Apparatus **100** is connected to the infrastructure environment, and supporting electronic circuitry for provide the power supply from the vehicle environment **1000** to the first apparatus **100.**
where the second apparatus **2000**:
• is a passive, without power supply, and without capability of charging by the illumination of the mm-waves being released by plurality of realization options, having a key feature to reflect the incident mm-wave waves coming from apparatus **100,** in the same direction, where mm-waves are approaching the apparatus **2000.**
• where at least two apparatuses **2000** are attached to the known and pre-defined object **300.**

2. System according to **Claim 1,**
• wherein at least two apparatuses **2000** are attached to the known and pre-defined apparatus **2000** positions inside known and pre-defined environment for vehicle **301,** movement and parking.

3. Method of operation, utilizing the System according to **Claim 1** wherein method of operation comprising three operation steps: "marking of the known object" being declared as a first operation step, "position detection of each apparatus **2000,** by apparatus **100"** being declared as second operation step, to be executed after the first step is executed, and "method for calculation of the 3D position of the known object **300",** being declared as third operation step to be executed after the second step is executed,
wherein the first operation step has following sub-set of operations:
• placing at least two apparatuses **2000,** at the surface of the known object **300,** where the surface of the object **300** is in the direction of the illumination of the apparatus **100,** and where the apparatuses **2000** are placed at the largest possible distance one from the another, where its geometrical distance is predefined and known
wherein the second operation step has following sub-set of operations:
• Transmission of mm-wave signals generated in **10** using **21**;
• Receiving mm-wave signals reflected from observation area using at least **110** and at least **120** receiver chains;
• Digital signal processing of the signal in **30,** by detecting position of each apparatus **2000,** where the position definition can be reduced to angular position definition of each apparatus **2000,** if the distance **500** and **501** is not changing.
• Information of the position of each apparatus **2000** is optionally communicated to the infrastructure environment **1000,** by means of entity **60**
wherein third operation step being executed after the second operation step, has following sub-set of operations:
• Having position of the apparatuses **2000** calculated, and having its known geometrical position of the illuminated surface of the known object **300,** the entity **30,** will calculate 3D position of the known object **300,** meaning object **300** orientation, being defined by the angles **502, 503,** and **504,** as well as the distance **501,** if **501** changes.
• Information of the 3D position of the known object **300** is communicated to the infrastructure environment **1000,** by means of entity **60**

4. Method of operation, utilizing the System according to **Claim 2** wherein method of operation comprising three operation steps: "marking of the known vehicle moving environment" being declared as a first operation step, "position detection of each apparatus **2000,** by apparatus **100"** being declared as second operation step, to be executed after the first step is executed, and "method for calculation of the vehicle **301** trajectory moving within known and marked environment", being declared as third operation step, to be executed after the second step is executed,
wherein the first operation step has following sub-set of operations:
• placing at least two apparatuses **2000,** at the predefined positions of the known area to be used by the vehicles **301, 302, 303,** surface of the apparatus **2000** are in the direction of the expected illumination of the apparatus **100,** and where apparatus **100** is integrated in the moving vehicle **301**
wherein the second operation step has following sub-set of operations:
• Transmission of mm-wave signals generated in **10** using **21**;
• Receiving mm-wave signals reflected from observation area using at least **110** and at least **120** receiver chains;
• Digital signal processing of the signal in **30,** by detecting position of each apparatus **2000,** in the illumination area, in front of the moving vehicle trajectory **2001,** of the vehicle **301,** where the position definition can be reduced to angular position definition of each apparatus **2000,** due to the fact that their position in pre-defined environment is known
• Information of the position of each apparatus **2000** is communicated to the vehicle **301** environment, by means of entity **60**
wherein third operation step being executed after the second operation step, has following sub-set of operations:
• Having position of the apparatuses **2000** calculated, and having its known position in the known area for moving vehicles, the vehicle system is calculating vehicle **301** position in the known vehicle movement area
• The vehicle **301** is calculating the ongoing movement by calculating the vehicle trajectory, to avoid obstacles in the predefined known vehicle moving area, allowing optional autonomous driving of the vehicle **301** in the predefined known area.

5. Method of operation according to **Claim 4** wherein the predefined vehicle moving environment is a parking facility.

6. Method of operation, utilizing the System according to **Claim 1** wherein at least three apparatuses **2000** are attached to the known and pre-defined at least two classes of known object classes **304** and **305,** where they are placed on the each object surface in the way to define unique combination of the shape, allowing object class recognising, by recognising unique positions of the apparatuses **2000** at the object classes surface;
wherein method of operation comprising three operation steps: "marking of the known object classes" being declared as a first operation step, "position detection of each apparatus **2000,** by apparatus **100"** being declared as second operation step, to be executed after the first step is executed, and "method for selection of the known object classes", being declared as third operation step, to be executed after the second step is executed,
wherein the first operation step has following sub-set of operations:
• placing at least three apparatuses **2000,** at the predefined known class of the objects **304** on the object surface in the direction of the expected illumination of the apparatus **100,** each class of the known object with different geometrical orientation of the apparatuses **2000**
wherein the second operation step has following sub-set of operations:
• Transmission of mm-wave signals generated in **10** using **21**;
• Receiving mm-wave signals reflected from observation area using at least **110** and at least **120** receiver chains;
• Digital signal processing of the signal in **30,** by detecting position of each apparatus **2000,** in the illumination area, of the objects under observation, where the position definition can be reduced to angular position definition of each apparatus **2000,** since their distance to the apparatus **100** could be known
wherein third operation step being executed after the second operation step, has following sub-set of operations:
• Having position of the apparatuses **2000** calculated, the environment system **1000** is calculating detected pattern of the positions of the apparatuses **2000,** identifying the class of the object under observation
• The environment system **1000** is initiated further actions of a crane, robot or the like platform having apparatus **100,** depending of the identification of the pre-defined class of object.

7. Method of operation according to **Claim 6** wherein the platform having apparatus **100** is crane and one of the class of pre-defined objects is container.

8. Method of operation according to **Claim 6** wherein the platform having apparatus **100** is a robot.

9. Method of operation, utilizing the System according to **Claim 1** wherein at least one apparatus **2000** are attached to cloths of the human being **307,** allowing its marking, and stronger radar cross sections reflection on the predefined distance to the apparatus **100,** as compared to the case where at the same distance related marking is not present **308**;
wherein method of operation comprising three operation steps: "marking of the cloths of the human being" being declared as a first operation step, "position detection of each apparatus **2000,** by apparatus **100"** being declared as second operation step, to be executed after the first step is executed, and "method for selection of the known object classes", being declared as third operation step, to be executed after the second step is executed,
wherein the first operation step has following sub-set of operations:
• placing at least one apparatus **2000,** at the cloths of selected human being **307** on the object surface in the direction of the expected illumination of the apparatus **100,**
where the second operation step has following sub-set of operations:
• Transmission of mm-wave signals generated in **10** using **21**;
• Receiving mm-wave signals reflected from observation area using at least **110** and at least **120** receiver chains;
• Digital signal processing of the signal in **30,** by detected receiver power level
wherein third operation step being executed after the second operation step, has following sub-set of operations:
• Having receiver strength being calculated, the environment system **1000** is selecting if the human being in predefined distance area has marked cloths
• The environment system **1000** is initiated further actions of the platform having apparatus **100,** depending of the identification of marked cloths.

10. Method of operation, utilizing the System according to **Claim 1** wherein at least one apparatus **2000** are attached to cloths of the human being **307,** and human being **308,** allowing its marking, in the way that they have different geometrical positions on the cloths, allowing apparatus **100** to detected at least two different geometrical positions of the apparatuses **2000**;
wherein method of operation comprising three operation steps: "marking of the cloths of the human being" being declared as a first operation step, "position detection of each apparatus **2000,** by apparatus **100"** being declared as second operation step, to be executed after the first step is executed, and "selection of the marked cloth class", being declared as third operation step, to be executed after the second step is executed,
wherein the first operation step has following sub-set of operations:
• placing at least two apparatuses **2000,** at the predefined positions of the cloths of the human being in the direction of the expected illumination of the apparatus **100,** where the geometrical positions of the apparatuses **200** is different for each class of the marked cloths
wherein the second operation step has following sub-set of operations:
• Transmission of mm-wave signals generated in **10** using **21**;
• Receiving mm-wave signals reflected from observation area using at least 110 and at least **120** receiver chains;
• Digital signal processing of the signal in **30,** by detecting position of each apparatus **2000,** and its geometrical positions
wherein third operation step being executed after the second operation step, has following sub-set of operations:
• Having position of the apparatuses **2000** calculated, event of detection specific geometrical pattern being mapped to the specific class of marked cloths is calculated
• The environment system **1000** is initiated further actions of the platform having apparatus **100,** depending of the identification of marked cloths.

11. Method of operation, utilizing the System according to **Claim 1** wherein at least two apparatus **2000** are attached, dense one to another and integrated in the vehicle environment infrastructure **311** and **310,** to ensure larger radar cross section, as in the case if they are not present, being illuminated by apparatus **100,** where apparatus **100** is on the other vehicle platform, or where apparatus **100** is on the other static traffic infrastructure, observing and illuminated by mm-waves the vehicle **311,** having integrated apparatuses **2000**;
wherein method of operation comprising three operation steps: "placing markers in the vehicles body" being declared as a first operation step, "reflection detection by apparatus **100"** being declared as second operation step, to be executed after the first step is executed, and "event detection", being declared as third operation step, to be executed after the second step is executed,
wherein the first operation step has following sub-set of operations:
• placing at least two apparatuses **2000,** in the vehicle body
wherein the second operation step has following sub-set of operations:
• Transmission of mm-wave signals generated in **10** using **21**;
• Receiving mm-wave signals reflected from observation area using at least **110** receiver chain;
• Digital signal processing of the signal in **30,** by detecting reflection at least two apparatuses **2000**
wherein third operation step being executed after the second operation step, has following sub-set of operations:
• Detecting the reflection and distance to the vehicle in the direction of the observation
• The environment system **1000** is initiated further actions of the platform having apparatus **100**

12. Method of operation, utilizing the System according to **Claim 1** wherein at least two apparatus **2000** are attached, dense one to another and integrated in the static traffic infrastructure known objects **315,** with known exact positions, close to the traffic roads **316,** to ensure larger radar cross section, as in the case if apparatuses **2000** are not present on object **315,** being illuminated by apparatus **100,** where apparatus **100** is on the moving vehicle platform, and where the known objects **315,** are arbitrary shape and size and arbitrary but known micro position related to the traffic roads **316**;
Wherein method of operation comprising three operation steps: "placing markers in the known object with known position close to traffic roads" being declared as a first operation step, "reflection detection by apparatus **100"** being declared as second operation step, to be executed after the first step is executed, and "event detection and position calculations", being declared as third operation step, to be executed after the second step is executed,
wherein the first operation step has following sub-set of operations:
• placing at least two apparatuses **2000,** in the known object **315** having known position
wherein the second operation step has following sub-set of operations:
• Transmission of mm-wave signals generated in **10** using **21**;
• Receiving mm-wave signals reflected from observation area using at least **110** receiver chain;
• Digital signal processing of the signal in **30,** by detecting reflection at least two apparatuses **2000**
wherein third operation step being executed after the second operation step, has following sub-set of operations:
• Detecting the reflection from the known object **315** and distance to the known object
• Using relative distance to the known object, an known object position from the available navigation information from the vehicle, recalculate and enhance the position of the vehicle having apparatus **100.**

13. Method of operation, utilizing the System according to **Claim 1** wherein at least two apparatus **2000** are attached, dense one to another and integrated in the static traffic infrastructure known objects **315,** with known exact positions, close to the traffic roads **316,** to ensure larger radar cross section, as in the case if apparatuses **2000** are not present on object **315,** being illuminated by apparatus **100,** where apparatus **100** is on the moving vehicle platform, and where the known objects **315,** are arbitrary shape and size and arbitrary but known micro position related to the traffic roads **316;** and
wherein at least two groups of apparatuses **2000,** each group having more than two apparatuses **2000,** are realized on the known objects **315,** being able by the illumination by the apparatus **100,** with the same distance to the object **315,** to generate clear differentiation in the receiving signal pattern, able to differentiate different class of objects **315,** depending of the geometrical arrangements of the groups of apparatuses **2000,** between them;
wherein method of operation comprising three operation steps: "placing group of markers in the known object with known position close to traffic roads" being declared as a first operation step, "group of markers detection by apparatus **100"** being declared as second operation step, to be executed after the first step is executed, and "event detection with position calculations", being declared as third operation step, to be executed after the second step is executed,
wherein the first operation step has following sub-set of operations:
• placing at least two groups each having at least two apparatuses **2000,** in the known object **315,** having known position
wherein the second operation step has following sub-set of operations:
• Transmission of mm-wave signals generated in **10** using **21**;
• Receiving mm-wave signals reflected from observation area using at least **110** and **120** receiver chain;
• Digital signal processing of the signal in **30,** by detecting reflection from the known object **315** and detection the positions of the group of apparatuses **2000**
wherein third operation step being executed after the second operation step, has following sub-set of operations:
• Recognising if more than one group of the apparatuses **2000** are presented on the known object **315** on its known position.
• If the more than one group of the apparatuses are detected on the known object **315** calculate their relative positions
• Encode the event being coded by the position of the groups of apparatuses **2000** on the known object **315**
• Using relative distance to the known object, an known object position from the available navigation information from the vehicle, recalculate and enhance the position of the vehicle having apparatus **100,** and take the measures being related to the encoded event.

14. Method of operation, utilizing the System according to **Claim 1** wherein at least one apparatus **2000** is integrated in the safety belt, which is part of the vehicle seat **317,** and where apparatus **100** is illuminating vehicle seat **317,** being integrated in the vehicle environment and connected to the vehicle infrastructure **1000;**
wherein method of operation comprising three operation steps: "seat occupation detection" being declared as a first operation step, "group of markers detection by apparatus **100"** being declared as second operation step, to be executed after the first step is executed, and "event detection with combined seat occupation and safety belt lock detection", being declared as third operation step, to be executed after the second step is executed,
wherein the first operation step has following sub-set of operations:
• Illumination of the vehicle seat **317** by the apparatus **100,**
• transmission of mm-wave signals generated in **10** using **21**;
• Receiving mm-wave signals reflected from observation area using at least **110** and **120** receiver chain;
• and detection of the seat occupancy by the extraction of at least one of the vital signs, and in case of detection providing this information to the vehicle infrastructure **1000**
wherein the second operation step has following sub-set of operations:
• vehicle infrastructure **1000,** in case of positive seat occupation detection by human being, is initializing detection of the apparatus **2000** in the field of the apparatus **100** illumination by the apparatus **100**
wherein third operation step being executed after the second operation step, has following sub-set of operations:
• If the detection of the apparatus **2000** in the second operation step two is positive, this information is sent to the vehicle infrastructure **1000,** and vehicle infrastructure is initialising further actions, having information that the seat under observation is occupied by the human being and the human being has safety belt in the position determining safety belt locking.
• If the detection of the apparatus **2000** in the second operation step two is negative, this information is sent to the vehicle infrastructure **1000,** and vehicle infrastructure is initialising further actions, having information that the seat under observation is occupied by the human being and the human being dies not have safety belt in the position determining safety belt is locked.

15. System according to claims 1 and 2, and metho accoding to claims where the passive apparatus **2000** is realized as corner, having front side toward the illumination being metal coated, and being realized by the plurality of the realization options, or
where the passive apparatus **2000** is realized as printed planar structure, reflected ways in the same polarization as received, or
**C**where the passive apparatus **2000** is realized as printed planar structure, reflected ways in the cross polarization as received.
